# EUROPEAN PATENT APPLICATION

(11) **EP 3 486 071 A1**
(43) Date of publication of application: **22.05.2019**
(21) Application number: 17202888.8
(22) Date of filing: 21.11.2017
(51) Int. Cl.: B29C 64/371, B33Y 30/00, B29C 64/153, B29C 64/259, B29C 64/25

(54) **APPARATUS FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Kremer, Viktor, 96215 Lichtenfels (DE)
(74) Representative: Hafner & Kohl

(57) **Abstract**

Apparatus (1, 22) for additively manufacturing of three-dimensional objects by means of successive layerwise selective irradiation and consolidation of layers of a build material which can be consolidated by means of an energy source, which apparatus (1, 22) comprises a process chamber (2) in which at least one opening (10 - 12) of a powder chamber of a powder module (9, 19, 20) is arranged, wherein at least one sealing device (14) is provided comprising at least one sealing unit (15, 23) moveable between a closed position and an opened position, wherein the sealing device (14) is adapted to seal the at least one opening (10 - 12) in the process chamber (2) with the at least one sealing unit (15, 23) in the closed position and to open the at least one opening (10 - 12) in the process chamber (2) with the at least one sealing unit (15, 23) in the opened position.

## Description

The invention relates to an apparatus for additively manufacturing of three-dimensional objects by means of successive layerwise selective irradiation and consolidation of layers of a build material which can be consolidated by means of an energy source, which apparatus comprises a process chamber in which at least one opening of a powder chamber of a powder module is arranged.

Such apparatuses for manufacturing three-dimensional objects are generally known from prior art, comprising a process chamber in which the additive manufacturing process is performed. In particular, the process chamber comprises a build plane that provides build material that can be consolidated, e.g. via an energy source, such as a laser beam or an electron beam. The build plane is, for example, provided by a powder module, in particular a build module, that comprises a carrying device with a height-adjustable carrying element that carries the build material. The carrying device is positioned in that the build material carried by the carrying element is accessible from the process chamber via an opening in the process plane of the process chamber, e.g. a bottom plate of the process chamber.

The connection between the powder module(s) and the process chamber is typically sealed against the environment to prevent a gas exchange between the process gas inside the process chamber and ambient air surrounding the process chamber. If a powder module has to be changed, for example after the build process is finished, the connection between the process chamber and the powder module is released, wherein the inertized atmosphere, in particular the process gas, inside the process chamber is usually lost. To inertize the process chamber in advance to another build process, process gas has to be streamed into the process chamber. The inertization process is therefore, associated with effort, as time and process gas is required to make the process chamber inert.

It is an object to provide an apparatus for additively manufacturing three-dimensional objects, wherein the effort in achieving an inert process environment is reduced.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that at least one sealing device comprising at least one sealing unit is moveable between a closed position and an opened position, wherein the sealing device is adapted to seal the at least one opening in the process chamber with the at least one sealing unit in the closed position. The sealing device is further adapted to open the at least one opening in the process chamber with the at least one sealing unit in the opened position. It is possible to move the sealing unit between the opened and the closed position, wherein dependent on the position of the sealing unit the opening in the process chamber is accessible or not. In other words, the opening in the process chamber is only accessible with the sealing unit in the opened position. With the sealing unit in the closed position, the opening in the process chamber is sealed and therefore, not accessible. The surface that is provided within the opening, e.g. a dose plane or a build plane or an overflow opening, is covered by the sealing unit, if the sealing unit is in the closed position. With the sealing unit in the opened position, the at least one opening is at least partially uncovered in that the surface arranged in the opening is accessible from within the process chamber, e.g. to irradiate build material arranged in the opening.

Thus, a control of whether the opening in the process chamber is accessible or not may be performed via a corresponding movement of the sealing unit. With the sealing unit in the closed position the opening in the process chamber is sealed against the environment. This allows for a disconnection of the module that is assigned or attached to the opening, in particular arranged below the opening without ambient air streaming into the process chamber. To prevent ambient air streaming into the process chamber the opening in the process chamber may be sealed in advance to disconnecting the module.

Advantageously, the process chamber does not have to be made inert when the module is disconnected or exchanged, respectively. Instead, the process conditions, in particular the atmosphere inside the process chamber can be kept inert, since a gas exchange between the environment and the inside of the process chamber is avoided by sealing the opening in the process chamber via the sealing unit. Hence, the time that is usually required to make the process chamber inert as well as the process gas that has to be streamed into the process chamber to displace the ambient air inside the process chamber, can be saved. The manufacturing process performed on the apparatus can therefore, be made more efficient as manufacturing cycles can be enhanced.

Preferably, the at least one sealing unit is movable between the open position and the closed position with the process chamber in an inertized state. An "inertized state" in the scope of this application refers to a state in which the process chamber is flooded with process gas, preferably an inert gas, to a defined degree. The inertized state further refers to a state, in which a gas exchange with the environment is not possible, i.e. a state in which process conditions under which the manufacturing process is performed are met inside the process chamber. According to the above-mentioned embodiment of the apparatus, the sealing unit may be switched from the closed position into the open position and vice versa, while the process chamber remains in the inertized state. Unlike a door or a maintenance flap or service door, moving the sealing unit between the opened position and the closed position does not affect the process conditions in terms of the inertization level.

Of course, if the corresponding module is detached from the apparatus, in particular from the process chamber, and the sealing unit is moved from the closed position into the open position the opening in the process chamber can be uncovered and therefore, a gas exchange with the ambience is possible. According to a preferred embodiment of the apparatus, the opening in the process chamber remains covered as long as no module is connected thereto. After a corresponding model has been connected to the opening in the process chamber, the sealing unit may again be moved from the closed position into the open position in that a volume inside the module is accessible from the process chamber of the apparatus.

Thus, at least one module may separably be connected or connectable with the at least one opening in the process chamber of the apparatus, wherein a connection state of the module is changeable with the at least one sealing unit in the closed position and wherein the module is accessible from the process chamber with the at least one sealing unit in the open position. With the sealing unit in the open position the opening in the process chamber is accessible from the process chamber. With the opening in the process chamber being accessible an interaction with the module which is assigned to the opening in the process chamber is possible.

For example, a dose module arranged in the opening in the process chamber may provide build material via the opening in that an application unit can pick up build material from a dose plane provided by the dose module and convey the build material. Additionally, a build module arranged in an opening in the process chamber may provide a build plane that can directly be irradiated via the energy source, for example an energy beam such as a laser beam or an electron beam. With the sealing unit in the closed position the respective opening is covered and therefore, the module is not accessible from the process chamber. Instead, the process chamber is sealed against the environment and the respective module(s) may be detached from the process chamber. In other words, the respective module seals the opening in the process chamber in a connected state. To disconnect the module from the process chamber of the apparatus the sealing unit is moved into the closed position sealing the opening. Afterwards, the module can be detached from the process chamber as the sealing task is performed by the sealing unit.

According to another embodiment of the apparatus, the at least one sealing unit is adapted to seal the process chamber covering the at least one opening that is arranged in a chamber element limiting the process chamber bottom sides. The chamber element may for example be built as a frame or a plate providing the at least one opening in the process chamber. The chamber element may comprise the process plane, i.e. the plane in which the manufacturing process is performed, e.g. the build plane and/or the dose plane. The at least one module, in particular a powder module, such as a dose module or a build module may be arranged in the apparatus in that via a corresponding carrying device, for example driving a build plate or a dose plate, the corresponding build material may be positioned in the process plane, e.g. as a dose plane or build plane that can be considered part of the process plane. By sealing the process plane with the sealing unit, the respective plane of the powder module is covered as well. In other words, the sealing unit covers the opening in the process chamber that is arranged above the respective powder module and through which the respective powder chamber is accessible from the process chamber.

The at least one sealing unit of the sealing device of the apparatus may be moved in different ways from the opened position into the closed position. Preferably, the sealing unit is lowered or pivoted or linearly moved from the opened position into the closed position. Accordingly, corresponding means for moving the sealing unit are provided in the apparatus, in particular in the process chamber, such as guiding elements, e.g. bars, hinges or rails the sealing unit can be moved along. Preferably, the sealing unit can be arranged in a closed position in which the manufacturing process is not affected, for example the sealing unit may be moved to a position outside the process chamber or into a region that does not have to be passed by other components of the apparatus such as an application unit or an energy beam generated by an irradiation device.

The at least one sealing unit generally may comprise any arbitrary shape, in particular the at least one sealing unit may comprise at least one plate-like sealing element covering the at least one opening in the closed position. The at least one sealing element may be considered part of the sealing unit that is moved and covers the opening in the process chamber. The sealing element may be constructed with respect to a cross-section of the opening, in particular the sealing element may be rectangular.

According to another embodiment of the apparatus, it is suggested that at least one sealing unit may comprise at least two sealing elements that are movable relative to each other, wherein the at least two sealing elements are preferably at least partly overlappingly arranged with the sealing unit in the open position. The sealing unit that is comprised of the at least two sealing elements may therefore, be composed of multiple sealing elements that can be moved relative to each other. The sealing unit may comprise sealing elements that are built as lamellae or panels. A movement of the sealing unit between the opened and the closed position can be compared to the opening or closing movement of a "curtain". The sealing unit may further be telescoped by moving into the closed position as the at least two sealing elements are moved relative to each other. The sealing element can further be built like a bellows comprising multiple corrugations that are pulled apart by a movement to the closed position and that are pushed together by a movement to the opened position.

The apparatus may further be improved in that the sealing device comprises at least one sealing unit that is built as common sealing unit with a sealing element adapted to close at least two openings and/or that the sealing device comprises at least one sealing unit with at least two sealing elements assigned to different openings, in particular to different types of modules. Hence, the sealing device may comprise at least one sealing unit that functions as common sealing unit with a common sealing element adapted to seal more than one opening simultaneously. For example a common sealing element may be built as a plate that can be moved over the process plane to cover the dose plane and the build plane (and an opening for an overflow module) simultaneously. Further the respective sealing device may comprise a sealing unit with two different sealing elements that are assigned to different openings, in particular to different types of modules. Such a sealing unit may comprise a first sealing element that is assigned to the dose module and is adapted to be moved over the dose plane and another sealing element that can be moved over the build module covering the build plane. Of course, a combination of both approaches is possible, wherein a common sealing element is used to cover two openings in the process plane at the same time and another sealing unit with a sealing element used to cover/uncover another opening in the process chamber.

According to another embodiment of the invention, at least a first and a second process chamber region may be provided that are separated by at least one chamber separation, wherein the at least one sealing unit is at least partly arranged in the first process chamber region in the closed position and at least partly arranged in the second process chamber region in the opened position or vice versa. According to this embodiment, the sealing unit or, in particular the sealing element, may be moved out of the process chamber region, i.e. the first process chamber region, in which the actual manufacturing process is performed. By moving the sealing unit or only the sealing element out of the process chamber region in which the object is built, the manufacturing process can be performed without being affected by the sealing unit. Thus, the sealing unit is inserted into the first process chamber region if the assigned opening in the process chamber has to be closed.

Further, a build plane may be located in the first process chamber region and a movement region for at least one tool carrier may be arranged in the second process chamber region. Thus, the second process chamber region may be a region in which at least one tool carrier may be moved and in which the sealing element can be "parked", if it is not used to seal at least one opening in the process chamber. The at least one sealing unit may further be arranged below a movement plane of the at least one tool carrier. Thus, the tool carrier may be moved independent of the sealing unit, in particular independent of the sealing unit being arranged in the opened position or the closed position. This allows for an independent movement of the sealing unit and the tool carrier. Of course, the tool carrier can only interact with the build plane or the dose plane or any other part of the process plane that is covered via the sealing unit in the closed position, if the sealing unit is in the opened position.

The at least one opening may be assigned to at least one dose module or at least one build module or at least one overflow module. The respective module may be attached to the process chamber in the region of the opening, in particular attached to a frame holding the respective module in place. The process plane is preferably built as a bottom plate of the process chamber providing three openings, wherein one opening is provided for dose modules, one opening is provided for build modules and one opening is provided for overflow modules. If one of these modules needs to be disconnected from the apparatus, for example exchanged, if the manufacturing process is finished and the build module has to be disconnected from the apparatus, the sealing unit seals the process plane in that the ambient air cannot enter the process chamber. Accordingly, after connecting a fresh build module, the sealing unit can be moved to the opened position.

Besides, the method relates to a sealing device, for an apparatus for additively manufacturing of three-dimensional objects by means of successive layerwise selective irradiation and consolidation of layers of a build material which can be consolidated by means of an energy source, which apparatus comprises a process chamber in which at least one opening of a powder chamber of a powder module is arranged, in particular for an inventive apparatus as described before, wherein at least one sealing unit is provided that is moveable between a closed position and an opened position, wherein the sealing device is adapted to seal at least one opening in the process chamber with the at least one sealing unit in the closed position.

The invention further relates to a method for operating at least one apparatus for additively manufacturing three-dimensional objects by means of successive layerwise selective irradiation and consolidation of layers of a build material which can be consolidated by means of an energy source, in particular an inventive apparatus as described before, which apparatus comprises a process chamber, wherein at least one sealing device is provided comprising at least one sealing unit moveable between a closed position and an opened position, wherein the sealing device seals at least one opening in the process chamber with the at least one sealing unit in the closed position.

The method may comprise the following steps:
- moving the at least one sealing unit into the closed position
- changing the connection state of at least one module separably connected or connectable to the apparatus with the process chamber in an inertized state
- moving the at least one sealing unit into the opened position.

If a module has to be exchanged or a fresh module has to be attached to the apparatus, in a first step of the method the at least one sealing unit may be moved into the closed position. Dependent on whether a common sealing unit is used that covers more than one opening in the process chamber or whether the opening that is assigned to the module that has to be exchanged is assigned to a specific sealing unit, the other openings may remain open or are also sealed via the common sealing unit.

After the sealing unit is brought into the closed position and the opening in the process chamber is sealed by the sealing unit, the connection status of at least one module can be changed. This may be a module that is already connected to the apparatus in that the module can be detached after the sealing is performed by the sealing unit. Alternatively the connection status of a module that is currently not connected to the apparatus can be changed in that said module can be attached to the apparatus with the sealing unit in the closed position.

After the connection between the module and the apparatus is established or if another module is attached to the corresponding opening, the sealing unit assigned to this opening can be moved into the open position again granting access from the process chamber to the opening and thus, to the module.

Of course, all details, features and advantages described with respect to the inventive apparatus are fully transferrable to the inventive sealing device and the inventive method and vice versa.

Exemplary embodiments of the invention are described with reference to the Fig. The Fig. are schematic diagrams, wherein
- Fig. 1: shows a top view of an inventive apparatus with a sealing unit in an opened position;
- Fig. 2: shows the apparatus of Fig. 1 with the sealing unit in a closed position;
- Fig. 3: shows the apparatus of Fig. 1 in a perspective view;
- Fig. 4: shows the apparatus of Fig. 2 in a perspective view;
- Fig. 5: shows the apparatus of Fig.1 with a tool carrier according to a second embodiment; and
- Fig. 6: shows an inventive apparatus according to a third embodiment.

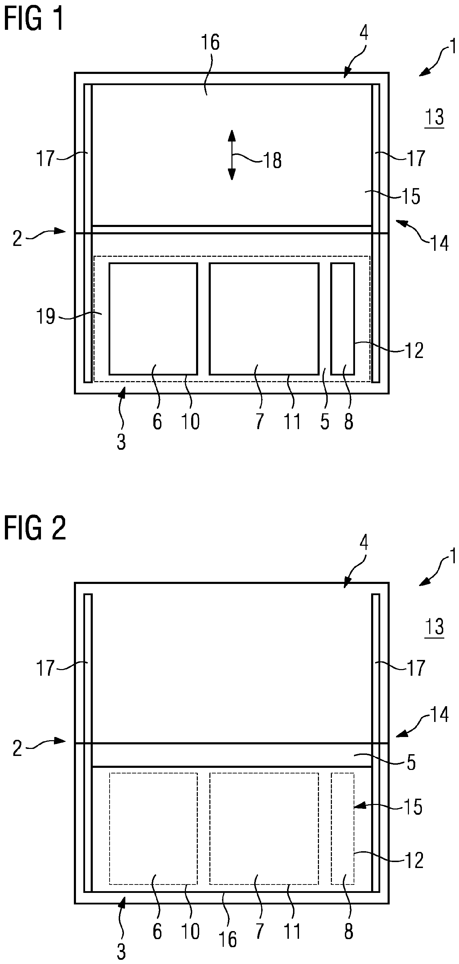

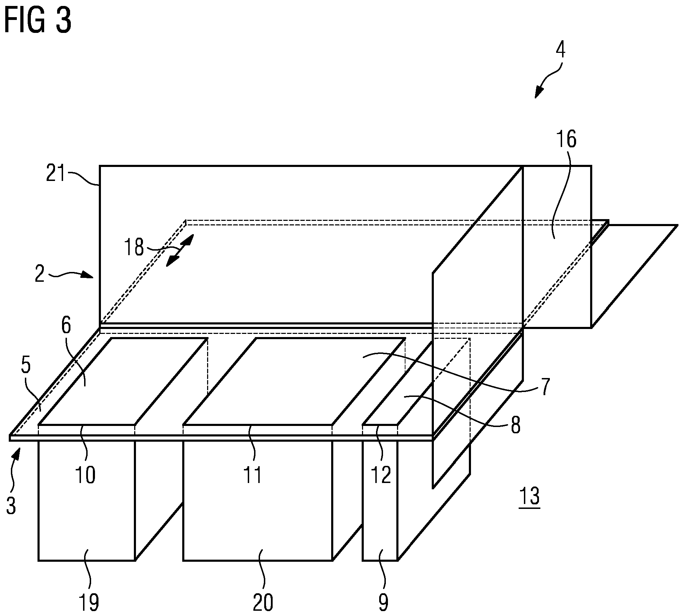

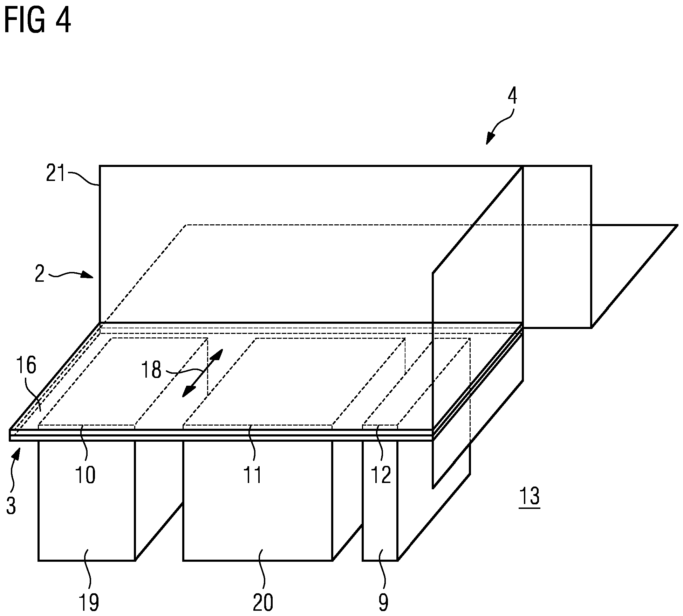

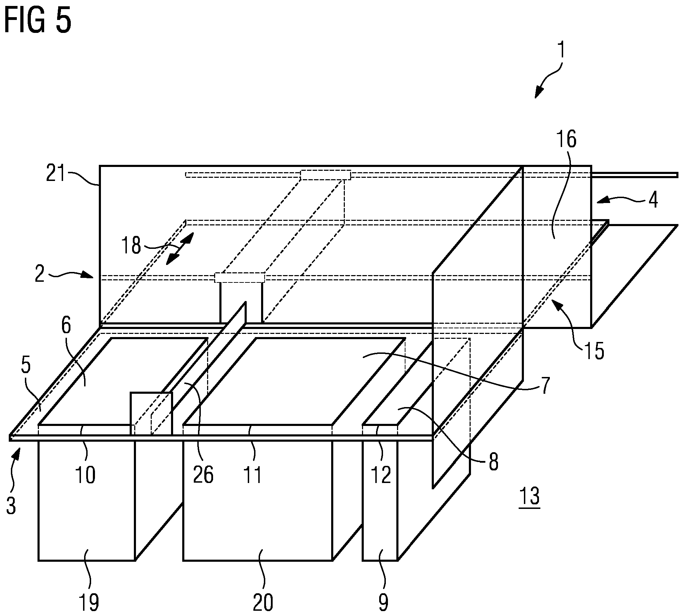

Fig. 1 shows an apparatus 1 for additively manufacturing of three-dimensional objects by means of successive layerwise selective irradiation and consolidation of layers of a build material which can be consolidated by means of an energy source. The apparatus 1 comprises a process chamber 2 which is subdivided into a first process chamber region 3 and a second process chamber region 4. The first process chamber region 3 is the region in which the additive manufacturing process is performed, i.e. in which the object is additively built. The first process chamber region 3 comprises a process plane 5 with a dose plane 6, a build plane 7 and an overflow opening 8. For the layerwise application of build material atool carrier 26, in particular an application unit (Fig. 5) is moved over the dose plane 6 to pick up build material that is arranged in the dose plane 6. The application unit may convey the build material to the build plane 7 in which the object is additively built by selective layerwise irradiating the build material arranged in the build plane 7. Excess build material can be conveyed further to the overflow opening 8 and disposed into an overflow module 9 (Fig. 3, 4).

As can be derived from Fig. 1, the dose plane 6, the build plane 7 and the overflow opening 8 are arranged in corresponding openings 10, 11, 12 in the process plane 5 of the process chamber 2. In other words, the openings 10, 11, 12 are sealed by the dose plane 6, the build plane 7 and the overflow module 9 in that the atmosphere inside the process chamber 2 is not in gas exchange with an environment 13 surrounding the process chamber 2.

The apparatus 1 further comprises a sealing device 14 comprising a sealing unit 15 with a sealing element 16 that is built as a rectangular plate. The sealing element 16 is movable, in particular drivable via a drive unit (not shown), along two guide elements 17 that are built as rails. Thus, the sealing element 16 can be moved in the direction of an arrow 18 from the second process chamber region 4 into the first process chamber region 3 and vice versa. In Fig. 1 the opened position of the sealing unit 15 is depicted, wherein a dashed contour 19 indicates a closed position of the sealing unit 15, in particular of the sealing element 16.

If the sealing element 16 is moved in the direction of the arrow 18, the sealing element 16 can be moved between the opened position, as depicted in Fig. 1, into the closed position, as depicted in Fig. 2. Fig. 2 further shows that in the closed position the sealing element 16 covers the dose plane 6, the build plane 7 and the overflow opening 8 (depicted as dashed lines) and therefore, covers the openings 10, 11, 12 in the process plane 5 of the process chamber 2, in particular in the first process chamber region 3. With the openings 10 - 12 of the process chamber 2 covered and sealed against the environment 13, the modules that are inserted in the respective openings 10 - 12 can be detached and therefore, disconnected from the apparatus 1.

As can be derived from Fig. 3, the process plane 5 is built as a plate in which a dose module 19, a build module 20 and the overflow module 9 are inserted. Thus, the dose module 19 provides the dose plane 6, the build module 20 provides the build plane 7 and the overflow module 9 provides the overflow opening 8. Fig. 3 shows the plate-like sealing element 16 in the opened position in which the sealing element 16 is retracted into the second process chamber region 4, wherein in the first process chamber region 3 of the process chamber 2 the openings 10 - 12 are accessible from the process chamber 2. In other words, the tool of the apparatus can access the dose plane 6, the build plane 7 and the overflow opening 8 from inside the first process chamber region 3. Fig. 3 further shows that the first process chamber region 3 and the second process chamber region 4 are divided by a chamber separation 21.

Again with reference to Fig. 4, the arrow 18 shows, that the sealing element 16 can be moved into the closed position, as depicted in Fig. 4, in which the sealing element 16 seals the openings 10 - 12 thereby, sealing the first process chamber region 3 against the environment 13. In the closed position, as depicted in Fig. 4, the module 9, 19, 20 can be detached from the apparatus 1 without opening the openings 10 - 12 in the process chamber 2, since the openings 10 - 12 are sealed by the sealing element 16. Thus, exchanging the modules 9, 19 and 20 is possible without decreasing the inertization level of the atmosphere inside the process chamber 2. Hence, process gas and time can be saved as the process chamber 2 does not have to be made inert whenever a module 9, 19, 20 has to be exchanged, e.g. after a module 9, 19, 20 has been exchanged. Thus, the process chamber 2 can be kept inert even after a manufacturing process has ended and the corresponding build module 20 and/or the dose module 19 has to be exchanged.

Fig. 5 shows that the dose plane 6 is located in the first process chamber region 3 and a movement region for at least one tool carrier 26 is arranged in the second process chamber region 4. Thus, the second process chamber region 4 is a region in which at least one tool carrier 26 may be moved and in which the sealing element 16 can be "parked", if it is not used to seal at least one opening 10 - 12 in the process chamber 2. The at least one sealing unit 15 in this embodiment is arranged below a movement plane of the at least one tool carrier 26. Thus, the tool carrier 26, for example a coater, in particular a coating blade, may be moved independent of the sealing unit 15, in particular independent of the sealing unit 15 being arranged in the opened position or the closed position. This allows for an independent movement of the sealing unit 15 and the tool carrier 26. Of course, the tool carrier 26 can only interact with the build plane 7 or the dose plane 6 or any other part of the process plane 5 that is covered via the sealing unit 15 in the closed position, if the sealing unit 15 is in the opened position.

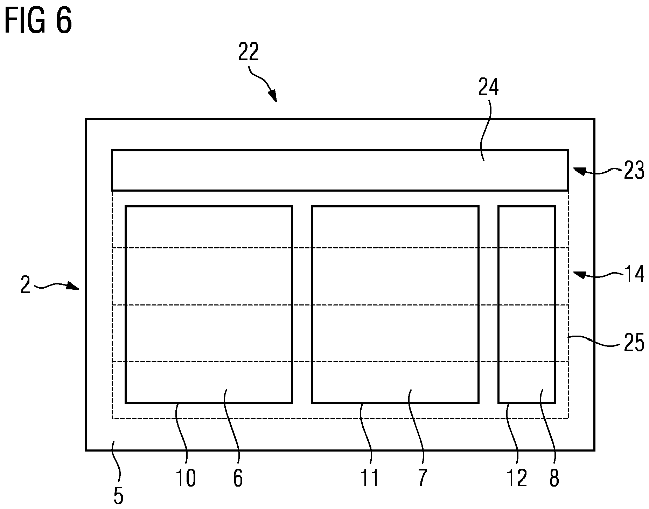

Fig. 6 shows an apparatus 22 according to a third embodiment. The apparatus 22 also comprises a process chamber 2 in which a process plane 5 is arranged comprising openings 10 - 12 for a dose plane 6, a build plane 7 and an overflow opening 8. Deviant from the apparatus 1, as depicted in the Fig. 1 to 4, the apparatus 22 comprises a sealing device 14 with a sealing unit 23 with multiple sealing elements 24. The sealing elements are arranged in that two sealing elements each are movably connected. Thus, the sealing elements 24 can be moved from the opened position, as depicted in Fig. 5, into a closed position, depicted as dashed contour 25.

In other words, the sealing elements 24 can be moved like a "curtain" in that the single sealing elements 24 are telescoped. Thus, the sealing elements 24 can be deemed as lamellae or panels that are relative movable to one another. To move the sealing unit 23 back from the opened position into the closed position, the single sealing elements 24 have to be pushed together releasing the openings 10 - 12 in the process plane 5.

Self-evidently, all details, features and advantages described with respect to the single embodiments are fully transferable. In particular, all embodiments can arbitrarily be combined. Further, instead of using a common sealing unit 15, 23 at least one sealing unit may be provided that is assigned to a single opening 10 - 12 or two openings 10 - 12. Of course, the apparatuses 1, 22 are adapted to perform the inventive method.

## Claims

1. Apparatus (1, 22) for additively manufacturing of three-dimensional objects by means of successive layerwise selective irradiation and consolidation of layers of a build material which can be consolidated by means of an energy source, which apparatus (1, 22) comprises a process chamber (2) in which at least one opening (10 - 12) of a powder chamber of a powder module (9, 19, 20) is arranged, **characterized by** at least one sealing device (14) comprising at least one sealing unit (15, 23) moveable between a closed position and an opened position, wherein the sealing device (14) is adapted to seal the at least one opening (10 - 12) in the process chamber (2) with the at least one sealing unit (15, 23) in the closed position.

2. Apparatus according to claim 1, **characterized in that** the at least one sealing unit (15, 23) is moveable between the opened position and the closed position with the process chamber (2) in an inertized state.

3. Apparatus according to claim 2, **characterized by** at least one module (9, 19, 20) separably connected or connectable with the at least one opening (10 - 12) in the process chamber (2) of the apparatus (1, 22), wherein a connection state of the module (9, 19, 20) is changeable with the at least one sealing unit (15, 23) in the closed position and wherein the module (9, 19, 20) is accessible from the process chamber (2) with the at least one sealing unit (15, 23) in the opened position.

4. Apparatus according to one of the preceding claims, **characterized in that** the at least one sealing unit (15, 23) is adapted to seal the process chamber (2) covering the at least one opening (10 - 12) that is arranged in a chamber element limiting the process chamber (2) bottom sides.

5. Apparatus according to one of the preceding claims, **characterized in that** the at least one sealing unit (15, 23) is lowered or pivoted or linearly moved from the opened position into the closed position.

6. Apparatus according to one of the preceding claims, **characterized in that** at least one sealing unit (15, 23) comprises at least one plate-like sealing element (16, 24) covering the at least one opening (10 - 12) in the closed position.

7. Apparatus according to one of the preceding claims, **characterized in that** at least one sealing unit (15, 23) comprises at least two sealing elements (16, 24) that are moveable relative to each other, wherein the at least two sealing elements (16, 24) are at least partly overlappingly arranged with the sealing unit (15, 23) in the opened position or the sealing unit (15, 23) comprises at least one sealing element (16, 24) that is deformable by moving between the opened and the closed position.

8. Apparatus according to one of the preceding claims, **characterized in that** the sealing device (14) comprises at least one sealing unit (15, 23) that is built as common sealing unit (15, 23) with a sealing element (16, 24) adapted to close at least two openings (10 - 12) and/or that the sealing device (14) comprises at least one sealing unit (15, 23) with at least two sealing elements (16, 24) assigned to different openings (10 - 12), in particular to different types of modules (9, 19, 20).

9. Apparatus according to one of the preceding claims, **characterized by** at least a first and a second process chamber region (3, 4) that are separated by at least one chamber separation (21), wherein the at least one sealing unit (15, 23) is at least partly arranged in the first process chamber region (3) in the closed position and at least partly arranged in the second process chamber region (4) in the opened position or vice versa.

10. Apparatus according to claim 9, **characterized in that** a build plane is located in the first process chamber region (3) and a movement region for at least one tool carrier is arranged in the second process chamber region (4).

11. Apparatus according to claim 10, **characterized in that** the at least one sealing unit (15, 23) is arranged below a movement plane of the at least one tool carrier (26).

12. Apparatus according to one of the preceding claims, **characterized in that** the at least one opening (10 - 12) is assigned to at least one dose module (19) or at least one build module (20) or at least one overflow module (9).

13. Sealing device (14), for an apparatus (1, 22) for additively manufacturing of three-dimensional objects by means of successive layerwise selective irradiation and consolidation of layers of a build material which can be consolidated by means of an energy source, which apparatus (1, 22) comprises a process chamber (2) in which at least one opening (10 - 12) of a powder chamber of a powder module (9, 19, 20) is arranged, in particular for an apparatus (1, 22) according to one of the preceding claims, **characterized by** at least one sealing unit (15, 23) moveable between a closed position and an opened position, wherein the sealing device (14) is adapted to seal at least one opening (10 - 12) in the process chamber (2) with the at least one sealing unit (15, 23) in the closed position.

14. Method for operating at least one apparatus (1, 22) for additively manufacturing three-dimensional objects by means of successive layerwise selective irradiation and consolidation of layers of a build material which can be consolidated by means of an energy source, in particular an apparatus (1, 22) according to one of the claims 1 to 12, which apparatus (1, 22) comprises a process chamber (2), **characterized by** at least one sealing device (14) comprising at least one sealing unit (15, 23) moveable between a closed position and an opened position, wherein the sealing device (14) seals at least one opening (10 - 12) in the process chamber (2) with the at least one sealing unit (15, 23) in the closed position.

15. Method according to claim 14, **characterized by** the following steps:
- moving the at least one sealing unit (15, 23) into the closed position
- changing the connection state of at least one module (9, 19, 20) separably connected or connectable to the apparatus (1, 22) with the process chamber (2) in an inertized state
- moving the at least one sealing unit (15, 23) into the opened position.
